**Europäisches Patentamt**

**European Patent Office**

**Office européen des brevets**

(19)

(11) Publication number:

**0 356 513**
**A1**

(12)

# EUROPEAN PATENT APPLICATION
## published in accordance with Art. 158(3) EPC

㉑ Application number: **88902535.9**

㉒ Date of filing: **10.03.88**

⑯ International application number:
**PCT/JP88/00249**

㉘ International publication number:
**WO 88/06948 (22.09.88 88/21)**

㉚ Priority: **13.03.87 JP 56432/87**

㊸ Date of publication of application:
**07.03.90 Bulletin 90/10**

㊷ Designated Contracting States:
**CH DE FR GB IT LI NL**

㉕ Int. Cl.⁵: **B23Q 17/20**

⑦ Applicant: **KITAMURA MACHINERY CO., LTD.**
**1870, Toide Komyoji**
**Takaoka-shi, Toyama-ken 939-11(JP)**

⑦ Inventor: **KITAMURA, Koichiro**
**11-5, Ekinan 3-chome**
**Takaoka-shi Toyama-ken 933(JP)**

㉞ Representative: **Patentanwälte RUFF, BEIER**
**und SCHÖNDORF**
**Neckarstrasse 50**
**D-7000 Stuttgart 1(DE)**

㉞ **METHOD OF DETERMINING THE SHAPE OF A PROCESSED WORK.**

㉗ In a conventional method of this kind, a processed work is removed from a machining tool and fixed on a table in a three-dimensional measuring apparatus to determine its shape with this apparatus. This invention has been developed with a view to eliminating drawbacks accompanying the above method. A work (W) is set on a table (15) and processed as the work (W) and a tool (23) are relatively moved. The processed work (W) set on the table (15) and a probe unit (3) are then relatively moved to determine a geometrical shape of the processed work (W). The geometrical shape of the processed work (W) can be determined with the processed work (W) left set on the table (15).

Fig. 2

TAN-003

# A METHOD FOR MEASURING THE SHAPE OF A MACHINED WORKPIECE

## CROSS-REFERENCE TO RELATED APPLICATION

This application is related to copending and commonly assigned application (Attorney Docket No. TAN-004) entitled A MACHINING CENTER by Koichiro Kitamura which is being filed concurrently herewith.

## BACKGROUND OF THE INVENTION

### TECHNICAL FIELD

This invention relates to a method for measuring the shape of a machined workpiece.

### BACKGROUND ART

A machining center, for example, is provided with a plurality of tools and a variety of machining operations can be carried out by them after setting a workpiece on a table of the machining center. When measuring the geometrical shape of a machined workpiece, the machined workpiece is removed from the table of the machining center and then fixed on a table of a three-dimensional measuring machine which is remote from the machining center. After that, a probe unit of the three-dimensional measuring machine comes into contact with the machined workpiece so as to measure its geometrical shape.

However, as the machined workpiece must be removed from the machining center table and then set on the table of the three-dimensional measuring machine, the measuring operation is troublesome and long.

## SUMMARY OF THE INVENTION

It is an object of this invention to solve the aforenoted problems by providing a method for measuring the shape of a machined workpiece in which the geometrical shape of the machined workpiece can be efficiently measured without removal from the table of a machining center.

This invention resides in a method for measuring the shape of a machined workpiece, comprising the steps of: placing a workpiece on a table, causing relative motion between the workpiece and a tool for machining the workpiece, and causing relative motion between the machined workpiece set on the table and a probe unit to thereby measure the geometrical shape of the machined workpiece.

According to this invention, after machining a workpiece, the geometrical shape of the machined workpiece can be efficiently measured without resetting the machined workpiece.

## BRIEF DESCRIPTION OF DRAWINGS

Fig. 1 shows in schematic form a concept of this invention.

Fig. 2 is a perspective view showing an embodiment of a machining center according to this invention.

Fig. 3 is a side elevational view showing the embodiment.

Fig. 4 is a perspective view showing a table and a laser length measuring machine.

Fig. 5 shows a schematic block diagram view including the laser length measuring machine and a probe unit.

Fig. 6 is a perspective view showing a probe and a workpiece on the table.

## DETAILED DESCRIPTION OF THE INVENTION

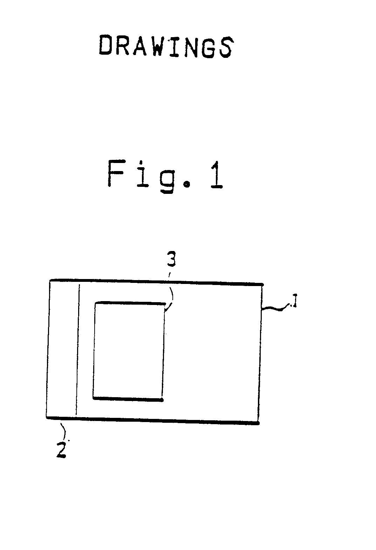

Fig. 1 schematically shows a machining center 1 for working

- 2 -

a method of this invention. The machining center 1 comprises a CNC unit 2 and a probe unit 3.

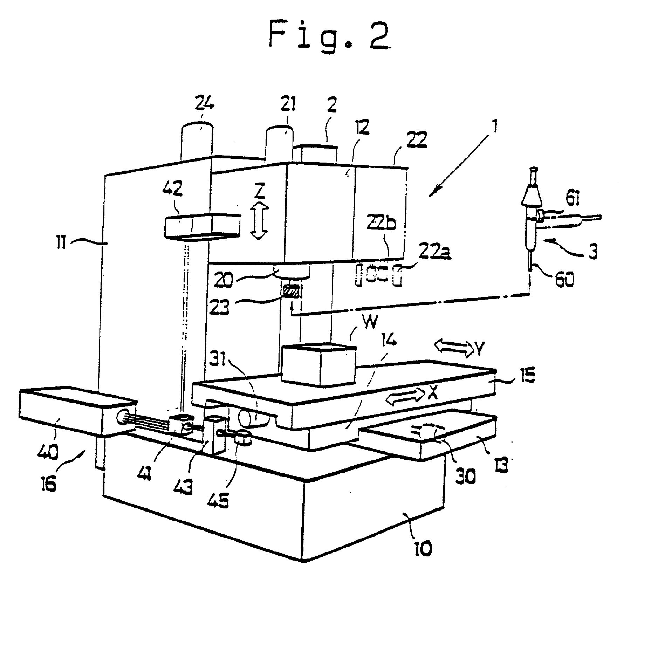

Referring now to Fig. 2, the machining center in Fig. 2 comprises a base 10, a column 11, the CNC unit 2, a spindlehead 12, saddles 13, 14, a table 15 and a laser length measuring apparatus generally indicated by reference numeral 16.

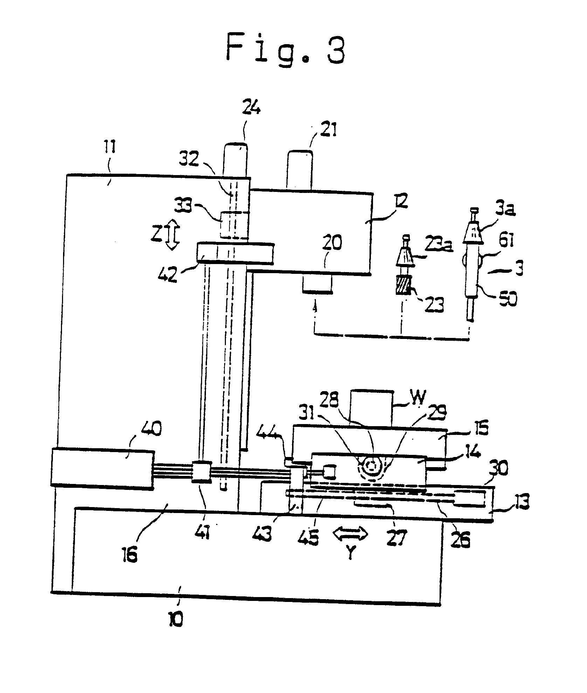

The spindlehead 12 has a spindle 20, a main motor 21, an automatic tool changer 22. The probe unit 3 can be detachably mounted in a spindlehead 12, for example, in a conventional manner such as a collet-chuck. An endmill 23, for example, is detachably mounted in the spindle 20. The endmill 23 has a holder 23a (see Fig. 3). The probe unit 3 has a holder 3a. Each of the holders can be detachably mounted in the spindle 20. The endmill 23 can be exchanged for a tool, such as a tool 22a set in the automatic tool changer 22 in a conventional manner. The probe unit 3 is substantially the same type of probe unit used in a conventional three-dimensional length measuring machine. But the probe unit 3 is provided with an actuator 61 for its attitude control. By operating the actuator 61, the probe 60 can rotate at a predetermined angle as shown by a dashed line.

The column 11 is provided with a servomotor 24. A laser head 40 and a polarization beam splitter 41 of the laser length measuring machine 16 are fixed to a side of the column 11. Also, a corner cube 42 is fixed to the spindlehead 12.

The saddle 13 is fixed on the base 10. The saddle 14 is slidably supported on the saddle 13. The table 15 is slidably supported on the saddle 14. A servomotor 30 is equipped within the saddle 13. The saddle 14 is provided with a servomotor 31. A workpiece W is detachably fixed on the table 15.

Referring to Fig. 3, a feed screw 32 is connected with respect to a servomotor 24. A nut 33 fixed to the spindlehead 12 engages the feed screw 32. Therefore, the spindlehead 12 can be moved in the direction of arrow Z by the servomotor 24. In addition, a feed screw 26 is connected with respect to a servomotor 30. A nut 27 fixed to the saddle 14 engages the feed screw 26. Therefore, the saddle 14 can be moved in the Y direction by the servomotor 30. Furthermore, a feed screw 28 is connected with respect to a servomotor 31. A nut 29 fixed to the table 15 engages the feed screw 28. Therefore, the table 15 can be moved in the X direction (see Fig. 2) by the servomotor 31.

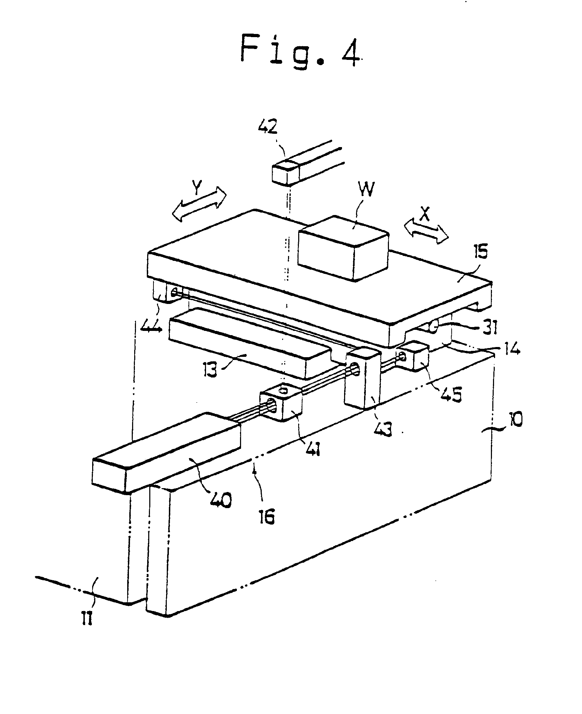

Referring to Fig. 4, a beam splitter 43 is fixed on the base 10. A corner cube 45 is fixed to the saddle 14. A corner cube 44 is fixed to the table 15.

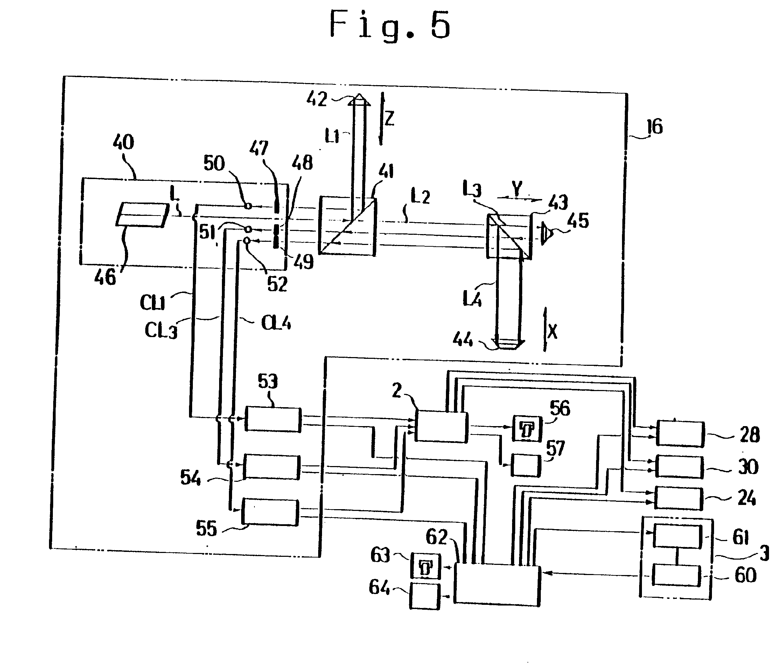

Referring to Fig. 5, the laser length measuring apparatus 16 has the laserhead 40, the polarization beam splitter 41, the corner cubes 42, 44, 45, the beam splitter 43 and counters 53 to 55. The counters 53 to 55 are connected to both the CNC unit 2 and a data processing unit 62. That is, the counts of the counters 53-55 are converted into the distances along the X, Y, and Z directions, respectively, which are sent to the CNC unit 2 and the data processing unit 62.

The laserhead 40 has a laser light source 46, polarization plates 47 to 49 and photodetectors 50 to 52. The laser light source 46 is preferably a He - Ne laser and, in this embodiment it is a single-frequency mode oscillation type laser. A laser beam L from the laser light source 46 is split by the polarization beam splitter 41 into two laser beams L1 and L2. The laser beam L1 is reflected from both the cube 42 and the polarization beam splitter 41 through the polarizing plate 47 to the photodetector 50. The laser beam L2 is split into laser beams L3 and L4 by the beam splitter 43. The laser beam L3 is reflected from the corner cube 45 through the beam splitter 43, the polarization beam splitter 41 and the polarizing plate 48 to the photodetector 51. The laser beam L4 is reflected from the

- 4 -

corner cube 44 to the beam splitter 43 and then the laser beam L4 is reflected from beam splitter 43 through the polarization beam splitter 41 and the polarizing plate 49 to the photodetector 52. A signal CL1 from the photodetector 50 is input to the counter 53. Similarly, a signal CL3 from the photodetector 51 is input to the counter 54, while a signal CL4 from the photodetector 52 is input to the counter 55. These counters 53 to 55 are conventional counters. The CNC unit 2 is connected to a printer 56 and a display 57.

The counters 53 to 55 of the laser length measuring machine 16 count the number of the moving interference fringes and convert such information into the distances, along X, Y and Z axes, respectively. This type of laser length measuring machine 16 is conventionally used.

Referring to Fig. 5, the servomotors 31, 30, 24 are electrically connected to the CNC unit 2 and operate according to commands from the CNC unit 2. In addition, the probe 60 of the probe unit 3 is designed to send a contact signal to the data processing unit 62. A printer 63 and a display 64 are electrically connected to the data processing unit 62. The geometrical shape of the workpiece W (see Fig. 4) can be observed in the data processing unit 62. The geometrical shape is the profile of the workpiece W, for example. The data processing unit 62 and the probe unit 3 are conventionally used for three-dimensional measuring machines. The data processing unit 62 can command the servomotors 31, 30, 24 and the actuator 61 according to a program for measuring the geometrical shape thereof.

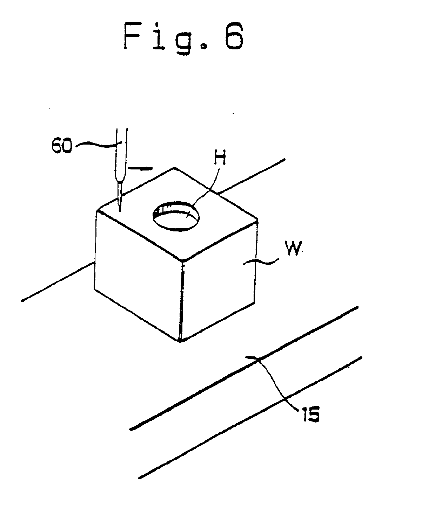

Referring to Fig. 2, first, after the workpiece W is set on the table 15 and the endmill 23 is mounted in the spindle 20, the spindlehead 12 is moved down by operating the servomotor 24 while the endmill 23 is rotated by operating the main motor 21 thereby to produce a hole H (Fig. 6) in an upper face of the workpiece W.

After producing the hole H, the spindlehead 12 (Fig. 2) is moved up to an initial predetermined position.

Next, the geometrical shape of the hole H (Fig. 6) is measured. In this case, the machined workpiece W is not removed from the table 15. In Fig. 3, the endmill 23 is removed from the spindle 20 and instead the probe unit 3 is mounted in the spindle 20. After that, a connecting line (not shown) for the probe 60 and a connecting line (not shown) for the actuator 61 are electrically connected to the data processing unit 62. The servomotors 31, 30, 24 are operated according to the program for measuring geometrical shape from the data processing unit 62 in such a manner that the probe 60 contacts the upper face of the workpiece W and the inside of the hole H.

If the probe 60 of the probe unit 3 should come in contact with the side of the workpiece W, the probe 60 may be horizontally directed by operating the actuator 61 (Fig. 2) according to the program stored in the data processing unit 62.

The data processing unit 62 determines the geometrical shape of the workpiece W according to the distance information along the X, Y, Z-axes from each of the counters 53 to 55 and contact or non-contact information from the probe 60.

As can be seen from the foregoing, the geometrical shape of the machined workpiece W can be precisely measured immediately after the workpiece W is machined.

When machining the workpiece W, the laser length measuring apparatus 16 measures the relative distances moved between the endmill 23 and the workpiece W set on the table 15 along the X, Y and Z-axes. In addition, the probe unit 3 measures the geometrical shape of the machined workpiece W, and the laser length measuring apparatus 16 measures the relative distances moved between the endmill 23 and the workpiece W set on the table 15 along the X, Y, and Z-axes in the same manner.

- 6 -

This invention is not limited to the above mentioned embodiment.

The length measuring machine may be the laser length measuring machine or a linear, encoder-type length measuring machine. The machining center 1 may be a horizontal machining center or other types. The probe unit 3 may be positioned within a casing to avoid chips and dust. The probe unit 3 is preferably taken out of the casing so as to be used only when measuring.

The table and the saddles can be covered with a dust-proof cover to avoid chips and dust while the spindle and the column can be covered with a dust-proof cover to avoid chips and dust.

The machining center 1 may be equipped with an automatic probe exchanger. The automatic probe exchanger can exchange a plurality of probes set in the spindlehead for one of the probes.

A laser light source of the laser length measuring machine may be a double-frequency mode oscillation type laser light source.

This invention is versatile for the measurement of the shape of a machined workpiece at a working site without the necessity of resetting the machined workpiece.

WHAT IS CLAIMED IS:

1. A method for measuring the shape of a machined workpiece, comprising the steps of: setting a workpiece on a table, causing relative motion between the workpiece and a tool to thereby machine the workpiece, and causing relative motion between the machined workpiece set on the table and a probe unit to thereby measure the geometrical shape of the machined workpiece.

# DRAWINGS

# Fig. 1

# Fig. 2

# Fig. 3

# Fig. 4

Fig. 5

EP 0 356 513 A1

# Fig. 6

# INTERNATIONAL SEARCH REPORT

International Application No    PCT/JP88/00249

## I. CLASSIFICATION OF SUBJECT MATTER (If several classification symbols apply, indicate all) *

According to International Patent Classification (IPC) or to both National Classification and IPC

Int.Cl$^4$    B23Q17/20

## II. FIELDS SEARCHED

### Minimum Documentation Searched [7]

| Classification System | Classification Symbols |
|---|---|
| IPC | B23Q17/20 |

### Documentation Searched other than Minimum Documentation to the Extent that such Documents are Included in the Fields Searched [8]

| | |
|---|---|
| Jitsuyo Shinan Koho | 1960 – 1987 |
| Kokai Jitsuyo Shinan Koho | 1971 – 1987 |

## III. DOCUMENTS CONSIDERED TO BE RELEVANT [9]

| Category * | Citation of Document, [11] with indication, where appropriate, of the relevant passages [12] | Relevant to Claim No. [13] |
|---|---|---|
| X | JP, A, 58-114843 (Niigata Engineering Co., Ltd.) 8 July 1983 (08. 07. 83) (Family: none) | 1 |
| X | JP, A, 60-079209 (Komatsu Ltd.) 7 May 1985 (07. 05. 85) (Family: none) | 1 |

* Special categories of cited documents: [10]

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance; the claimed invention cannot be considered novel or cannot be considered to involve an inventive step

"Y"  document of particular relevance; the claimed invention cannot be considered to involve an inventive step when the document is combined with one or more other such documents, such combination being obvious to a person skilled in the art

"&"  document member of the same patent family

## IV. CERTIFICATION

| Date of the Actual Completion of the International Search | Date of Mailing of this International Search Report |
|---|---|
| May 26, 1988 (26. 05. 88) | June 6, 1988 (06. 06. 88) |

| International Searching Authority | Signature of Authorized Officer |
|---|---|
| Japanese Patent Office | |

Form PCT/ISA/210 (second sheet) (January 1985)